(19) Europäisches Patentamt

European Patent Office

Office européen des brevets

(11) Publication number: **0 237 131 B1**

## (12) EUROPEAN PATENT SPECIFICATION

(45) Date of publication of patent specification :
**24.07.91 Bulletin 91/30**

(21) Application number : **87200450.2**

(22) Date of filing : **10.03.87**

(51) Int. Cl.⁵ : **C08F 20/00**

(54) **Process for the preparation of water-soluble saccharide polymers.**

(30) Priority : **13.03.86 GB 8606248**

(43) Date of publication of application :
**16.09.87 Bulletin 87/38**

(45) Publication of the grant of the patent :
**24.07.91 Bulletin 91/30**

(84) Designated Contracting States :
**BE CH DE FR GB IT LI NL SE**

(56) References cited :
**GB-A- 1 099 372**
**GB-A- 2 159 524**

(56) References cited :
"**Entwicklung neuer Polymertypen zur Tertiärförderung von Erdöl", Forschungsbericht
165-2 der Deutschen Gesellschaft für
Mineralölwissenschaft, 1982
Kunststoff-Lexikon, Carl Hanser-Verlag, 1981;
p. 426**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Graafland, Teunis
Badhuisweg 3
NL-1031 CM Amsterdam (NL)**

(74) Representative : **Aalbers, Onno et al
P.O. Box 302
NL-2501 CH The Hague (NL)**

## Description

The invention relates to a process for the preparation of water-soluble vinyl saccharide polymers which can be used e.g. as thickeners or as water treating agents.

In "Entwicklung neuer Polymertypen zur Tertiärförderung von Erdöl", - Forschungsbericht 165-2 (1982) of the Deutsche Gesellschaft für Mineralölwissenschaft und Kohlenchemie - a survey is given on the preparation and performance of water-soluble vinyl saccharide polymers, including those which would result in aqueous solutions having higher viscosities than obtained sofar with such polymers. For both options which are available for the preparation of such polymers, i.e. firstly polymerization of a vinyl ester of a monosaccharide, of which the hydroxyl groups have been protected, in an organic solvent medium and in the presence of a free-radical initiator, followed by treatment with acid to liberate the hydroxyl groups to render the polymer water-soluble and secondly polymerization in water of a water-soluble vinyl ester of a monosaccharide in the presence of hydrogen peroxide, potassium persulphate or ammonium persulphate as free-radical initiator, it is concluded that it was not possible to produce water-soluble polymers which as a 1 %w solution in water had a viscosity higher than 2.0 mPa.s at 25°C.

Surprisingly, it has now been found possible to prepare watersoluble vinyl saccharide polymers, of which the aqueous solutions have considerably higher viscosities than aqueous solutions based on the water-soluble vinyl saccharide polymers prepared hitherto, if certain initiators are used at certain vinyl saccharide monomer concentrations.

Accordingly, the invention provides a process for the preparation of water-soluble vinyl saccharide polymers by polymerization in water of at least one water soluble monovinyl saccharide monomer at a temperature in the range of from 0°C to 60°C, wherein the polymerization is carried out in the presence of a redox initiator system, and the concentration of water-soluble monovinyl saccharide monomer in water is not higher than 150 kg/m³ water.

A free-radical polymerization wherein the free-radicals originate from a redox initiator system, generally has a lower energy of activation than the corresponding thermally initiated free-radical polymerization. Hence the so called redox polymerization can generally be operated at a lower temperature, a condition which favours the formation of high molecular weight polymers.

Redox initiator systems, which systems comprise a combination of at least one oxidant compound and a reducing agent, are often sub-divided in accordance with the nature of the main oxidizing component.

Redox initiator systems which are preferably employed are selected from redox initiator systems based on a peroxide, a persulfate, a peroxydiphosphate or a permanganate type of oxidant. Such peroxide type of oxidant is preferably hydrogen peroxide, a diacyl peroxide or a hydroperoxide.

Reducing agents which may be combined with oxidizing agents in general or with selected oxidizing agents to form a redox system, are known from many publications and textbooks on polymerization, such as from Redox Polymerization by G.S. Misra and U.D.N. Bajpai in Progress in Polymer Science, Vol.8, pp 61-131, 1982. Such compounds include different ferrous salts ; nitrogen containing compounds such as ammonia, aliphatic amines, thiourea, and hydroxylamine ; miscellaneous acids such as oxalic acid, 1-ascorbic acid and tartaric acid ; sulfur based compounds such as sodium bisulfite, ethylene sulfate, sulfuric acid and the like.

Preferred redox initiator systems are those based on hydrogen peroxide or on a persulfate, e.g. an alkali metal or ammonium persulfate, in combination with a salt of a reducing acid of sulfur, such as sodium disulfite $(Na_2S_2O_5)$, sodium dithionite $(Na_2S_2O_4)$, sodium thiosulfate $(Na_2S_2O_3)$, sodium formaldehyde sulfoxylate and the like. With certain types of redox systems it may be advantageous to include an additional promotor in order to achieve e.g. a faster polymerization or to enable the polymerization to be conducted at a lower temperature.

Monomers which may conveniently be used in the preparation of water-soluble vinyl saccharide polymers are water soluble mono- or di-saccharide compounds containing a polymerizable vinyl group, hereinafter referred to as monovinyl saccharide monomer. This polymerizable vinyl group may be a vinyloxy or a vinylcarbonyloxy group. Suitable such vinyloxy group-containing monosaccharide compounds include : 3-O-vinyl-D-glucose, 6-vinyl-D-galactose and 1-O-vinyl-L-sorbose.

The group of polymerizable monosaccharide compounds bearing a vinylcarbonyloxy group include compounds such as 3-O-acryloyl-D-glucose, 3-O-methacryoyl-D-glucose, 6-O-acryloyl-D-galactose 6-O-methacryloyl-D-galactose, 1-O-acryloyl-L-sorbose. 1-O-methacryloyl-L-sorbose, 1-O-acryloyl-mannose and 1-O-methacryloyl-mannose.

Methods for the preparation of the polymerizable water-soluble vinyloxy group-containing monosaccharides have been disclosed by e.g. Reppe et al in Annalen, 1956, 601, 81 and Watanabe and Colon in J. Amer. Chem. Soc. 1957, 79, 2828. A method for the preparation of the polymerizable water-soluble vinylcarbonyloxy group-containing monosaccharides has been disclosed by Black et al, Makromol. Chem. 117 (1968), 210.

Although the preparation of these water-soluble vinyl saccharide polymers can be carried out with both the vinyloxy group and vinylcarbonyloxygroup-containing saccharide monomers, the preferred monovinyl saccharide monomer is a monomethacryloyl and/or a monoacryloyl saccharide monomer, because it appears to be more difficult to prepare high molecular weight polymers employing a vinyloxygroup-containing saccharide monomer. Within the group of water-soluble vinylcarbonyloxygroup-containing saccharide monomers there is a preference for using the mono-saccharide esters of methacrylic acid as it is thought that they will result in water-soluble polymers which generally are hydrolytically more stable than the corresponding acrylic acid based products. More preferably the monovinyl saccharide monomer is 3-O-methacryloyl-D-glucose.

The above monomers all have in common that their polymerization will result in a water-soluble vinyl saccharide polymer having a non-ionic character. However, the present invention is not restricted to the preparation of the non-ionic water-soluble saccharide polymers, but can also be affected to provide water-soluble polyvinyl saccharide polymers having an ionic character. This may be effected by carrying out the polymerization of water-soluble e.g. monosaccharide monomer in the presence of at least one water-soluble polymerizable compound bearing an ionic group e.g. a carboxy or sulfo ($HO.SO_2$-) group. Suitably such ionic water-soluble monomers include acrylic acid, methacrylic acid, maleic acid, itaconic acid (also referred to as "methylene succinic acid") 3-O-methacryloyl-D-gluconic and acid. Preferably in the process of the present invention at least one water-soluble $\alpha,\beta$-olefinically unsaturated mono- or dicarboxylic acid is copolymerized. Methacrylic acid is an especially preferred ionic water-soluble monomer. The amount of water-soluble monomer of the ionic type, which may be copolymerized is not critical and may vary over a wide range and will to a large extent be governed by the performance requirements of the ultimate polymer.

The preparation of the water-soluble vinyl saccharide polymers can be effected by any of the known polymerization processes such as batchwise polymerization, via a steady state process, via a programmed addition etc. In view of the relatively small scale on which the experiments for the present invention have been carried out, a batchwise polymerization was considered to be very suitable but should not be interpreted to be a limitation of the process according to the present invention. With the batchwise mode of polymerization the aqueous monomer solution and the initiator are introduced into the reactor before commencing the reaction, which reaction is preferably carried out in a nitrogen atmosphere. As it is the intention to produce high molecular weight polymers it can be expected that the viscosity in the reactor towards the end of the reaction will be extremely high, hence the starting concentration of monomer in water should not exceed 150 kg/m³ water and more preferably not exceed 100 kg/m³ water. Moreover, too high a monomer concentration may result in gel formation.

As hereinbefore described, redox initiator systems consist of at least two components, i.e. an oxidant compound and a reducing agent ; individually each of these compounds may vary greatly in chemical composition. The molar ratio in which the oxidant compound and the reducing agent are present in such a redox initiator system is governed by the chemical nature of the components. For a given redox inititator system this molar ratio has a constant value and will generally be in the range of from 5 :1-1 :5, as exemplified hereinafter.

The molar ratio of oxidant to water-soluble monomer is at least 1 :500 and preferably at least 1 :1000.

As it is objective of the present invention to prepare water-soluble vinyl saccharide polymers which will result in aqueous solutions having a high viscosity, it is necessary for the molecular weight of said polymer to be as high as possible. High molecular weight polymers may generally be prepared by conducting the polymerization at relatively low temperatures. Hence the process of the present invention may conveniently be carried out at a temperature in the range of from 0°C - 60°C and more preferably in the range of from 0°C - 35°C.

At the end of the polymerization reaction the polymer may be isolated from any unreacted monomer etc. by pouring the reactor contents in an excess of e.g. ethanol, whereupon the polymer is precipitated. Upon drying the precipitate, a white water-soluble cake is obtained. In the event of the polymer being a copolymer of at least one water-soluble saccharide monomer and at least one water-soluble carboxy group-bearing monomer, the dried polymer is dissolved in a large excess of water and subsequently the carboxy groups neutralized with an aqueous solution of an alkali metal hydroxide or ammonium hydroxide, which neutralization reaction results, depending on the carboxylic acid content of the water-soluble polymer, in a considerable increase in the viscosity of the solution.

The non-ionic type of water-soluble vinyl saccharide polymers prepared by the process of this invention may conveniently be used as thickeners, and aqueous solutions can be obtained therefrom having a high viscosity at low polymer concentration, which viscosity appears to be hardly affected by the salinity of said solution. Hence these polymers are eminently suitable for use as water thickeners in flooding water which is applied in the enhanced oil recovery (EOR) even under circumstances of relatively high salinity of formation water. Other outlets for these polysaccharide polymers may be found e.g. in the ink and paper industry, while their use in the exploration and production of oil and gas such as in drilling fluids and completion fluids is also envisaged. Although the viscosity of aqueous solutions based on the ionic type of vinyl saccharide polymers may be very much higher compared to that of similar solutions based on comparable non-ionic type of vinyl saccharide polymers -i.e. those prepared under the same polymerization conditions - this can only be realised with salinity free or low salinity solutions. An increase in the salinity of the solution may well result in a considerable decrease in the viscosity of the solution. Hence these ionic type of polymers may advantageously be employed in applications where salinity-free or low salinity water is present e.g. for EOR in low salinity reservoirs or for water treatment.

The invention will be further described with reference to the following examples wherein the following terms have been defined as follows :

| Code | chemical name | chemical formula |
|------|---------------|------------------|
| APS | : ammonium persulfate | $(NH_4)_2S_2O_8$ |
| PPS | : potassium persulfate | $K_2S_2O_8$ |
| $H_2O_2$ | : hydrogen peroxide | |
| t-BuOOH | : tert-butyl hydroperoxide | |
| SDS | : sodium disulfite | $Na_2S_2O_5$ |
| SDTN | : sodium dithionite | $Na_2S_2O_4$ |
| MG | : 3-O-methacryloyl-D-glucose | |
| MA | : methacrylic acid | |
| poly MG/MA: | copolymer of MG and MA | |

The polymers obtained have been characterised by the viscosity at 25°C of the aqueous solutions containing 1.0 %w of polymer. The viscosity measurements were conducted using a Brookfield viscometer equipped with an UL-adapter and the resulting values expressed as mPa.s.

Preparation of 3-O-methacryloyl-D-glucose (MG).

4 g of 1,2 :5,6-di-O-isopropylidene-3-O-methacryloyl-D-glucose (DIMG), 25 mg of p-methoxyphenol and 30 ml 0.5 N HCl were introduced into a 100 ml glass reactor equipped with a glass stirrer, a thermometer and a reflux condensor, and subsequently the reactor was placed in an thermostated oil-bath. The reactor contents were heated to 70°C with continuous stirring, and maintained at this temperature until the contents had become homogeneous (1-2 h). After cooling to room-temperature the reactor contents were transferred to a separatory funnel. To remove the p-methoxyphenol, the 3-O-methacryloyl-D-glucose solution was treated with 50 ml diethyl ether and after phase separation had occurred the organic phase was removed. This extraction procedure was repeated four times. Subsequently the aqueous solution was transferred to the above-mentioned 100 ml glass reactor and a pressure slightly below atmospheric was applied to remove the last traces of diethyl ether. Finally the solution was neutralized to a pH of 7 with 1.0 N NaOH, which procedure was carefully monitored by pH measurement. A solids determination indicated that the MG content of the aqueous solution was 8 %w (= 0.32 mol/l).

Examples I to V

Preparation of poly-MG at 8°C employing different redox initiator systems, in an oxidant/MG molar ratio of $1 :10^4$.

50 ml of an 8 %w aqueous MG solution prepared as hereinbefore described, was introduced into a 100 ml glass reactor as described hereinbefore and which was subsequently placed in a thermostated bath having a temperature of 8°C. After the contents of the reactor had reached the temperature of 8°C, appropriate amounts of the corresponding redox initiator components were added as aqueous solutions containing 3.22 mol/l of the corresponding component, to arrive at an oxidant/MG molar ratio of $1 :10^4$. With mild stirring and a slight $N_2$ purge the reactor contents were maintained at this temperature for 22 hours. Upon termination of the polymerization reaction the reactor contents were poured out under continuous stirring in approximately 150 ml ethyl alcohol whereupon the poly-MG was precipitated. After removing the liquid phase the residue was dried under sub-atmospheric pressure at 50°C to a constant weight. The ultimate products were white, water-soluble powders. The viscosities of the different aqueous solutions prepared from these poly-MG polymers are given in

Table I.

<u>TABLE 1</u>

| Example | Redox initiator system | | | viscosity of 1 %w aqueous solution at 25°C and $\dot{\gamma} = 7.4 \ s^{-1}$ |
|---------|------------------------|----------------|----------------|---------------------------------------------------------------------------------|
|         | oxidant | reducing agent | molar ratio | mPa.s |
| I       | APS      | SDS  | (1:1) | 29.0 |
| II      | PPS      | SDTN | (1:1) | 44.6 |
| III     | $H_2O_2$ | SDTN | (1:1) | 26.3 |
| IV      | t-BuOOH  | SDTN | (1:1) | 9.1  |
| V       | APS      | SDS  | (1:1) + 2 %w $FeSO_4$ | 31.3 |

<u>Examples VI - IX</u>

<u>Preparation of poly-MG at different temperatures in the presence of a $H_2O_2$/SDTN (1 :1) initiator system and in a $H_2O_2$/MG molar ratio of 1 :10$^4$.</u>

Following the procedure as described in examples I to V and using the same equipment, poly-MG was prepared in the presence of a $H_2O_2$/SDTN (1 :1) redox initiator system. With these experiments the temperature of the thermostated bath was set at the values as indicated in Table 2, which table also gives the resulting viscosities of the aqueous solutions.

<u>TABLE 2</u>

| Example | Polymerization temperature °C | viscosity of 1 %w aqueous solution at 25°C and $\dot{\gamma} = 7.4 \ s^{-1}$ mPa.s |
|---------|-------------------------------|------------------------------------------------------------------------------------|
| VI      | 8  | 26.3 |
| VII     | 20 | 21.6 |
| VIII    | 35 | 13.2 |
| IX      | 50 | 4.7  |

<u>Examples X - XIII</u>

<u>Preparation of poly-MG at 8°C in the presence of an APS/SDS (1 :1) initiator system, at different APS/MG molar ratio's.</u>

Following the same procedure and using the same equipment as in examples I-V, poly-MG was prepared at 8°C in the presence of different amounts of the APS/SDS redox initiator. APS and SDS were added to the 8

5

%w MG solution in the form of aqueous solutions containing 3.22 mmol/l of the corresponding component and in amounts to arrive at the APS/MG molar ratio as indicated in Table 3, and in an APS/SDS molar ratio of (1 :1). The viscosities of the aqueous solutions of the resulting polymers are given in Table 3.

## TABLE 3

| Example | APS/MG Molar ratio | Viscosity of 1 %w aqueous solutions at 25°C and $\dot{\gamma} = 7.4 \ s^{-1}$ mPa.s |
|---------|--------------------|-------------------------------------------|
| X       | $1:8 \times 10^2$  | 0.9  |
| XI      | $1:10^3$           | 7.9  |
| XII     | $1:5 \times 10^3$  | 16.0 |
| XIII    | $1:10^4$           | 29.0 |

### Comparative Experiments A-D.

Preparation of poly MG at different polymerization temperatures employing APS and $H_2O_2$ respectively, at a MG/initiator molar ratio of 1000 :1.

These experiments were carried out according to the procedure described in Examples VI-IX and wherein the APS and $H_2O_2$ were added to the reactor contents as aqueous solutions containing 1 g initiator/l and polymerizing at the temperatures as indicated in Table 4, which Table also gives the viscosities of the aqueous solutions prepared from these MG-polymers.

## TABLE 4

| Comparative Experiments | Polymerization temperature, °C | Viscosity of 1 %w aqueous solutions at 20°C and $\dot{\gamma} = 7.4 \ s^{-1}$ mPa.s | |
|-------------------------|--------------------------------|------------|-------|
| | | APS | $H_2O_2$ |
| A | 85 | 2.7 | 5.1 |
| B | 65 | 2.0 | 2.7 |
| C | 55 | 2.3 | 5.8 |
| D | 40 | 4.0 | – |

### Examples XIV

### Preparation of MG/MA copolymer.

To an aqueous solution of MG prepared as described hereinbefore, MA and water was added in such amounts so as to arrive at a solution having a MG/MA molar ratio of 77/23 and a monomer content of 8 %w. 50 Ml of the thus obtained solution was introduced into a 100 ml glass reactor as described hereinbefore and flushed with $N_2$ to remove any oxygen. Subsequently 250 μl of an aqueous solution of SDS/APS 1 :1 containing so much SDS/APS 1 :1 to arrive at a monomer/APS molar ratio of 10000 :1 was introduced into the reactor. With the aid of a thermostated bath the reactor contents were cooled to 8°C with moderate stirring and a slight $N_2$ purge and maintained at this temperature for 22 hours. Upon termination of the polymerization the reactor contents were poured out under continuous stirring in approximately 150 ml ethyl alcohol, whereupon the MG/MA copolymer was precipitated. After drying the MG/MA copolymer was dissolved in 250 ml water and the carboxylic acid groups where carefully neutralized employing an aqueous 1 N NaOH solution. Subsequently the resulting solution was poured out in 200 ml ethyl alcohol and the obtained precipitate was dried under sub-atmospheric pressure at 50°C to constant weight. Aqueous solutions were prepared containing 0.1, 0.25 and 1.0 %w of the neutralized MG/MA copolymer and the viscosity of the obtained solutions was determined. Together with that of the 0.25 %w solution to which so much NaCl was added to arrive at a 3 %w NaCl solution. The viscosity data are given in Table 5.

## TABLE 5

| NaCl concentration %w | 0 | 3 |
|---|---|---|
| Copolymer concentration %w | viscosity of aqueous solutions at 25°C and $\dot{Y} = 7.4 \ s^{-1}$ mPa.s | |
| 0.1 | 56.2 | − |
| 0.25 | 137 | 5.39 |
| 1.0 | >440 | − |

## Claims

1. A process for the preparation of water-soluble vinyl saccharide polymers by polymerization in water of at least one water-soluble monovinyl saccharide monomer at a temperature in the range of from 0°C to 60°C, wherein the polymerization is carried out in the presence of a redox initiator system and the concentration of water-soluble monovinyl saccharide monomer in water is not higher than 150 kg/m³ water.

2. A process as claimed in claim 1, wherein the redox initiator system is selected from redox initiator systems based on a peroxide, a persulfate, a peroxydiphosphate or a permanganate type of oxidant, and a reducing agent.

3. A process as claimed in claim 2, wherein the oxidant is hydrogen peroxide, a diacylperoxide or a hydroperoxide.

4. A process as claimed in claim 2, wherein the persulfate is an alkali metal or ammonium persulfate.

5. A process as claimed in any of claims 2-4, wherein the reducing agent is salt of a reducing acid of sulfur.

6. A process as claimed in any one of the preceding claims, wherein the concentration of the water-soluble monovinyl saccharide monomer in water does not exceed 100 kg/m³ water.

7. A process as claimed in any one of the preceding claims, wherein the monovinyl saccharide monomer is a monomethacryloyl and/or a monoacryloyl saccharide monomer.

8. A process as claimed in any one of the preceding claims, wherein the monovinyl saccharide monomer is 3-O-methacryloyl-D-glucose.

9. A process as claimed in any one of the preceding claims, wherein at least one water-soluble α,β-olefinically unsaturated mono- or dicarboxylic acid is copolymerized.

10. A process as claimed in claim 9, wherein the water-soluble α,β-olefinically unsaturated monocarboxylic acid is methacrylic acid.

11. A process as claimed in any one of the preceding claims, wherein the molar ratio of oxidant compound to water-soluble monomer is at least 1 :500.

12. A process as claimed in claim 11, wherein the molar ratio of oxidant to water-soluble monomer is at least 1 :1000.

13. A process as claimed in any one of the preceding claims, wherein the temperature is in the range of from 0°C - 35°C.

## Patentansprüche

1. Verfahren zur Herstellung von wasserlöslichen Vinyl-saccharid-Polymeren durch Polymerisation in Wasser von mindestens einem wasserlöslichen Monovinyl-saccharid-Monomer bei einer Temperatur im Bereich von 0°C bis 60°C, wobei die Polymerisation durchgeführt wird in Gegenwart eines Redox-Initiatorsystems und die Konzentration an in Wasser löslichem Monovinyl-saccharid-Monomer in Wasser nicht mehr als 150 kg/m³ Wasser beträgt.

2. Verfahren nach Anspruch 1, wobei das Redox-Initiatorsystem ausgewählt ist aus Redox-Initiatorsystemen auf der Basis eines Oxidationsmittels vom Peroxid-, Persulfat-, Peroxydiphosphat-oder Permanganat-Typ und einem Reduktionsmittel.

3. Verfahren nach Anspruch 2, wobei das Oxidationsmittel Wasserstoffperoxid, ein Diacylperoxid oder ein Hydroperoxid ist.

4. Verfahren nach Anspruch 2, wobei das Persulfat ein Alkali- metall- oder Ammoniumpersulfat ist.

5. Verfahren nach einem der Ansprüche 2 bis 4, wobei das Reduktionsmittel ein Salz einer reduzierenden Säure von Schwefel ist.

6. Verfahren nach einem der vorangehenden Ansprüche, wobei die Konzentration an wasserlöslichem Monovinyl-saccharid-Monomer in Wasser nicht über 100 kg/m³ Wasser hinausgeht.

7. Verfahren nach einem der vorangehenden Ansprüche, wobei das Monovinyl-saccharid-Monomer ein Monomethacryloyl- und/oder ein Monoacryloyl-saccharid-Monomer ist.

8. Verfahren nach einem der vorangehenden Ansprüche, wobei das Monovinyl-saccharid-Monomer 3-O-Methacryloyl-D-glucose ist.

9. Verfahren nach einem der vorangehenden Ansprüche, wobei zumindest eine wasserlösliche, $\alpha,\beta$-olefinisch ungesättigte Mono- oder Dicarbonsäure copolymerisiert wird.

10. Verfahren nach Anspruch 9, wobei die wasserlösliche $\alpha,\beta$-olefinisch ungesättigte Monocarbonsäure Methacrylsäure ist.

11. Verfahren nach einem der vorangehenden Ansprüche, wobei das Molverhältnis von Oxidansverbindung zu wasserlöslichem Monomer zumindest 1 :500 beträgt.

12. Verfahren nach Anspruch 11, wobei das Molverhältnis von Oxidans zu wasserlöslichem Monomer zumindest 1 :1000 beträgt.

13. Verfahren nach einem der vorangehenden Ansprüche, wobei die Temperatur im Bereich von 0°C bis 35°C liegt.

## Revendications

1. Procédé de préparation de polyvinyl saccharides solubles dans l'eau, par polymérisation dans l'eau d'au moins un saccharide monovinylique monomère soluble dans l'eau à une température de 0 °C à 60 °C, selon lequel la polymérisation est effectuée en présence d'un système initiateur redox, et selon lequel la concentration dans l'eau du saccharide monovinylique monomère soluble dans l'eau, n'est pas supérieure à 150 kg/m³ d'eau.

2. Procédé selon la revendication 1, dans lequel le système initiateur redox est choisi parmi les systèmes initiateurs redox à base d'un oxydant de type peroxyde, persulfate, peroxydiphosphate ou permanganate, et d'un agent réducteur.

3. Procédé selon la revendication 2, dans lequel l'oxydant est le peroxyde d'hydrogène, un peroxyde de diacyle ou un hydroperoxyde.

4. Procédé selon la revendication 2, dans lequel le persulfate est un persulfate de métal alcalin ou d'ammonium.

5. Procédé selon l'une quelconque des revendications 2 à 4, dans lequel l'agent réducteur est un sel dérivé d'un acide sulfuré réducteur.

6. Procédé selon l'une quelconque des revendications précédentes, dans lequel la concentration dans l'eau du saccharide monovinylique monomère soluble dans l'eau, n'est pas supérieure à 100 kg/m³ d'eau.

7. Procédé selon l'une quelconque des revendications précédentes, dans lequel le saccharide monovinylique monomère, comprend un monométhacryloyl et/ou un monoacryloyl saccharide monomères.

8. Procédé selon l'une quelconque des revendications précédentes, dans lequel le saccharide monovinylique monomère, est le 3-O-méthacryloyl-D-glucose.

9. Procédé selon l'une quelconque des revendications précédentes, dans lequel on copolymérise au moins un acide mono ou dicarboxylique à insaturation α,β-oléfinique soluble dans l'eau.

10. Procédé selon la revendication 9, dans lequel l'acide monocarboxylique à insaturation α,β-oléfinique soluble dans l'eau, est l'acide méthacrylique.

11. Procédé selon l'une quelconque des revendications précédentes, dans lequel le rapport molaire du composé oxydant au monomère soluble dans l'eau, est d'au moins 1 :500.

12. Procédé selon la revendication 11, dans lequel le rapport molaire de l'oxydant au monomère soluble dans l'eau, est d'au moins 1 :1 000.

13. Procédé selon l'une quelconque des revendications précédentes, dans lequel la température est de 0 °C à 35 °C.